# EUROPÄISCHE PATENTSCHRIFT

(11) **EP 3 296 150 B1**
(45) Veröffentlichungstag und Bekanntmachung des Hinweises auf die Patenterteilung: **17.03.2021**
(21) Anmeldenummer: 17188495.0
(22) Anmeldetag: 30.08.2017
(51) Int. Cl.: B60M 1/23, H02G 7/05

(54) **HÄNGEANORDNUNG FÜR ELEKTRISCHE BETRIEBSMITTEL**
SUSPENDING ARRANGEMENT FOR ELECTRICAL APPARATUS
DISPOSITIF DE SUSPENSION POUR MATÉRIEL ÉLECTRIQUE

(30) Priorität: 14.09.2016 DE 102016217501
(43) Veröffentlichungstag der Anmeldung: 21.03.2018
(73) Patentinhaber: Siemens Energy Global GmbH & Co. KG, 81739 München (DE)
(72) Erfinder: Bockarev, Alexander, 12623 Berlin Marzahn-Hellersdorf (DE); Göhler, Reinhard, 13503 Berlin (DE); Roggow, Henrik, 13403 Berlin (DE)

(56) Entgegenhaltungen:
- EP-A1- 0 561 315
- CN-U- 205 429 661
- DE-U1- 8 402 726
- US-A- 4 658 100

## Beschreibung

Die Erfindung betrifft eine Hängeanordnung für elektrische Betriebsmittel nach Anspruch 1.

In der Energietechnik werden Betriebsmittel eingesetzt, die neben elektrischen Anforderungen auch mechanischen Anforderungen standhalten müssen. Betriebsmittel können beispielsweise Isolatoren oder Überspannungsableiter sein, die zur hängenden Montage an einer Freileitung oder dergleichen vorgesehen sind. Überspannungsableiter zur hängenden Montage sind aus der Produktbroschüre "Leitungsableiter für erhöhte Systemzuverlässigkeit", Siemens AG 2012, Bestell-Nr. E50001-G630-A203, bekannt. Isolatoren in der Bauform Langstabisolatoren sind aus der Produktbroschüre "Silikon-Langstabisolatoren 3FL für Mittel- und Hochspannungsfreileitungen", Siemens AG 2011, Bestell-Nr. E50001-G630-A193, bekannt.

Die mechanischen Anforderungen an die Betriebsmittel hängen dabei von einer Vielzahl von Faktoren ab, wie beispielsweise der Aufstellungsart oder dem Aufstellungsort. Neben der klassischen Aufstellung eines Betriebsmittels auf dem Boden, findet auch die hängende Montage vielfältige Anwendung. Hierbei stellt sich die Herausforderung, dass das Betriebsmittel einerseits sein Eigenwicht tragen und andererseits Biegekräfte aufnehmen muss. Die Biegekräfte treten insbesondere als Biegekopfkräfte am Aufhängepunkt auf, wenn Belastungen tangential zur Hauptachse des Betriebsmittels auftreten. Solche Kräfte können beispielsweise durch Seilzug oder durch seismische Aktivität bzw. Erdbeben entstehen. Nicht immer ist es aus technischen oder ökonomischen Gründen möglich oder sinnvoll Betriebsmittel auf mögliche Maximalkräfte hin zu dimensionieren. Dennoch stellen Kunden mechanische Anforderungen an ihre Anlagen, um den Betrieb auch in Extremsituationen sicherzustellen.

Aufgrund besonders hoher elektrischer Anforderungen müssen unter Umständen mehrere Betriebsmittel in Reihe geschaltet werden, was in der Praxis ein Aneinanderhängen der Betriebsmittel zur Folge hat. Dadurch wird allerdings das Gewicht relativ groß und der Hebelarm entsprechend lang. Die Folge ist eine hohe Belastung des oberen Kopfanschlusses für die in Reihe geschalteten, hängenden Betriebsmittel. Eine mögliche Lösung ist die mechanische Verstärkung des einzelnen Betriebsmittels, was zwangsläufig zu erhöhten Produktionskosten führt.

Ein anderer Lösungsansatz ist die Einzelmontage der Betriebsmittel, z.B. an der Hallendecke. Dabei kann eine Fußplatte eines Betriebsmittels mithilfe einer Leitung mit der Kopfplatte des nächsten Betriebsmittels verbunden werden. Dadurch wird der Hebelarm kurz gehalten und das zu tragende Einzelgewicht minimiert. Allerdings bedeutet diese Art der Montage einen hohen Platzaufwand in der Fläche.

Ein weiterer Ansatz ist aus der DE 10 2007 010 857 A1 bekannt. Dabei wird an eine Freileitung ein Überspannungsableiter angehängt, bei der einen Mehrzahl einzelner Ableitermodule mittels Kupplungsanordnungen untereinander derart verbunden sind, dass der Überspannungsableiter biegsam ausgebildet ist.

Gattungsgemäße Hängeanordnungen sind aus den Druckschriften DE 84 02 726 U1 und CN 205429661 U bekannt. Ferner beschäftigen sich die Druckschriften EP 0 561 315 A1 und US 4 658 100 A mit einer Aufhängung für Betriebsmittel.

Der Auslegeschrift DE 10 76 219 ist eine Doppel- oder Mehrfachhängeislolatorkette entnehmbar, welche bei aus einzelnen Kettenteilen zusammengesetzten Ketten ein oder mehrere Verbindungspunkte der Kettenteile jeweils über starre Verbindungsstücke vorsieht. Über eine Traverse werden Kettenteile mit einer Neigung zueinander befestigt, so dass ihre oberen Enden einen größeren Abstand aufweisen als die unten Enden.

Dem Dokument CN 204 835 438 U ist eine parallele Anordnung von zwei Isolatorketten entnehmbar, welche über eine Traverse miteinander gekoppelt sind. Der Offenlegungsschrift DE 103 24 443 A1 ist ein Zugisolator für Antennenstrukturen und Hochspannungsleitungen entnehmbar. Dort sind Anschlussplatten des Zugisolators über eine Versagenssicherung durch zwei kontaktlos ineinander geschlagene Schlaufen gesichert. Der Patentschrift DE 592 548 ist eine Einrichtung zum Dämpfen von mechanischen Schwingungen von Freileitungen entnehmbar. Dazu ist eine Schutzeinrichtung vorgeschlagen, welche unter Vernichtung von Schwingungsenergie stark dämpfend auf eine schwingende Leitung einwirkt. Dazu sind Kolben in einem dämpfenden Medium angeordnet, die unter Wirkung einzelner oder mehrerer nicht ineinander gelagerter Federn steht.

Ausgehend von bekannten Ansätzen zur hängenden Montage von Betriebsmitteln ist es die Aufgabe der Erfindung, eine Hängeanordnung für elektrische Betriebsmittel anzugeben, die vergleichsweise platzsparend und leicht ist sowie Biegekräften vergleichsweise gut stand halten kann.

Die Erfindung löst diese Aufgabe durch eine Hängeanordnung für elektrische Betriebsmittel gemäß Anspruch 1.

Bei gängigen Betriebsmitteln können zwar große Zugkräfte, jedoch keine oder nur sehr geringe Biegekräfte aufgenommen werden. Müssen aufgrund der elektrischen Anforderungen mehrere Geräte in Reihe bzw. parallel geschaltet und anschließend hängend montiert werden, so führt dies zu einem hohen Gesamtgewicht. Dadurch kann die durch den Kunden geforderte mechanische Stabilität nicht mehr gewährleistet werden. Die erfindungsgemäße Hängeanordnung hat den Vorteil, dass eventuell auftretende Biegekräfte auf die Betriebsmittel ein Minimum reduziert und die mechanische Festigkeit sichergestellt werden.

Durch die parallele Aufhängung der Betriebsmittel zwischen oberem und unterem Befestigungsmittel können die Betriebsmittel bei Stößen oder dergleichen nicht aneinander schlagen und dadurch beschädigt werden. Die biegsamen Kontaktmittel, die beispielsweise als flexible Kabel oder Litzen ausgebildet sein können, ermöglichen ein Mitschwingen der Hängeanordnung bei Stößen und vermeiden auf diese Weise eine zu starke Biegebeanspruchung auf die Betriebsmittel.

In einer bevorzugten Ausführungsform der erfindungsgemäßen Hängeanordnung sind die Betriebsmittel auf einer waagerechten Ebene gegeneinander versetzt an den Befestigungsmitteln angeordnet, so dass die Befestigungsmittel in einer waagerechten Hängeposition stabilisiert werden. Dies hat den Vorteil, dass Schwing- und Drehbewegungen weiter vermindert werden. Beispielsweise kann der Versatz der Betriebsmittel derart ausgebildet sein, dass die eine Hälfte der Betriebsmittel auf einer ersten waagerechten Achse und die andere Hälfte der Betriebsmittel auf einer zweiten waagrechten Achse, die parallel zur ersten Achse verläuft, angeordnet sind. Wird eine alternierende Reihenfolge gewählt, d.h. dass das erste Betriebsmittel der ersten Achse zugeordnet wird, das zweite Betriebsmittel der zweiten Achse, das dritte Betriebsmittel wieder der ersten Achse und so fort, ergibt sich in einer Draufsicht ein Zick-Zack-Muster der Aufhängung der Betriebsmittel. Dies ist besonders vorteilhaft, weil es Biegebelastungen gut aufnehmen kann.

In einer weiteren bevorzugten Ausführungsform der erfindungsgemäßen Hängeanordnung sind die Befestigungsmittel im Wesentlichen plattenförmig ausgebildet. Dies ist ein Vorteil, weil eine Platte, z.B. aus Metall, einfach und kostengünstig zu fertigen ist und gleichzeitig eine hohe mechanische Belastbarkeit aufweist.

In einer weiteren bevorzugten Ausführungsform der erfindungsgemäßen Hängeanordnung sind die Befestigungsmittel im Wesentlichen als ein Profil mit wellenförmigem Querschnitt ausgebildet. Dies ist ein Vorteil, weil ein solches wellenförmiges Profil besonderes stabil bei geringem Gewicht ist. Je geringer die Masse der Befestigungsmittel ist, desto geringer ist das Gewicht der Hängeanordnung insgesamt und desto mehr "Module" aus Betriebsmitteln und Befestigungsmitteln können aneinandergehängt werden, ohne die bauartbedingte Zugbelastbarkeit der Betriebsmittel zu überschreiten.

In einer weiteren bevorzugten Ausführungsform der erfindungsgemäßen Hängeanordnung sind an dem unteren Befestigungsmittel weitere Betriebsmittel angeordnet, die mit einem zusätzlichen Befestigungsmittel verbunden sind. Die Kombination aus je einem Befestigungsmittel oben und unten sowie den Betriebsmitteln kann als ein "Modul" aufgefasst werden. Prinzipiell können so viele Module untereinander gehängt werden, wie dies die bauartbedingte Zugbelastbarkeit der Betriebsmittel gestattet. Der Vorteil dieser Anordnung besteht darin, dass nur eine sehr geringe Fläche auf oder über den Boden beansprucht wird. Dies ermöglicht es, die Hängeanordnung in der Höhe - nämlich durch Höherhängen - zu erweitern, ohne zusätzlichen Platz am Boden zu beanspruchen. Gerade bei elektrischen Anlagen mir sehr begrenztem Platzangebot und Nachrüstungen ist die Erfindung daher mit Vorteil einsetzbar.

In einer weiteren bevorzugten Ausführungsform der erfindungsgemäßen Hängeanordnung umfassen die Betriebsmittel elektrische Isolatoren.

In einer weiteren bevorzugten Ausführungsform der erfindungsgemäßen Hängeanordnung umfassen die Isolatoren Langstabisolatoren.

In einer weiteren bevorzugten Ausführungsform der erfindungsgemäßen Hängeanordnung umfassen die Betriebsmittel Überspannungsableiter.

In einer weiteren bevorzugten Ausführungsform der erfindungsgemäßen Hängeanordnung ist jedem Befestigungsmittel mindestens ein Koronarring zur elektrischen Feldsteuerung zugeordnet. Dies ist ein Vorteil, weil Koronarringe lange erprobt sind, um Feldspitzen an scharfen Kanten von elektrischen Anlagen unter Hochspannung zu vermeiden. Mit Vorteil sind jedem Befestigungsmittel jeweils mindestens zwei Koronarringe zugeordnet, von denen einer nach oben und einer nach unten ausgerichtet ist. Dabei können die Koronarringe beispielsweise an den Befestigungsmitteln oder an den Betriebsmitteln angebracht sein.

In einer weiteren bevorzugten Ausführungsform der erfindungsgemäßen Hängeanordnung sind die biegsamen Kontaktmittel elektrisch leitfähig.

In einer weiteren bevorzugten Ausführungsform der erfindungsgemäßen Hängeanordnung sind die biegsamen Kontaktmittel als Kabel oder Litzen ausgebildet. Dies ist vorteilhaft, weil diese Bauweise besonders einfach, kostengünstig und lange erprobt ist.

In einer weiteren bevorzugten Ausführungsform der erfindungsgemäßen Hängeanordnung weisen die biegsamen Kontaktmittel Gelenke auf. Dies ist vorteilhaft, weil die Gelenke über einen vergleichsweise längeren Zeitraum eine Flexibilität bereit stellen können, während bei einfachen Litzen oder Kabeln ggf. Abnutzungserscheinungen durch mechanische Beanspruchung auftreten können.

In einer weiteren bevorzugten Ausführungsform der erfindungsgemäßen Hängeanordnung weisen die biegsamen Kontaktmittel Kugelgelenke auf. Dies ist vorteilhaft, weil Kugelgelenke in allen Richtungen eine hohe Flexibilität bereit stellen.

In einer weiteren bevorzugten Ausführungsform der erfindungsgemäßen Hängeanordnung weisen die biegsamen Kontaktmittel Scharniergelenke aufweisen. Dies ist vorteilhaft, weil Scharniergelenke besonders zuverlässig und wartungsarm sind. Dabei müssen alle Scharniergelenke in ihrer Scharnierrichtung gleich ausgerichtet sein, um ein Schwingen der Hängeanordnung zur ermöglichen.

In einer weiteren bevorzugten Ausführungsform der erfindungsgemäßen Hängeanordnung sind die biegsamen Kontaktmittel federnd ausgebildet. Dies ist besonders vorteilhaft, weil durch eine Federung Stöße oder Erbeben besonders gut ohne Beschädigung der Hängeanordnung und der Betriebsmittel überstanden werden können. Als Federung kann beispielsweise eine Schraubenfeder eingesetzt werden. Auch eine Kombination mit einem Dämpfungselement, wie es etwas im Automobilbau bei Stoßdämpfern eingesetzt wird, um die Federung im so genannten Kriechfall ohne nennenswertes Nachschwingen zu betreiben, ist mit Vorteil einsetzbar.

Zur besseren Erläuterung der Erfindung zeigen die
- Figur 1: eine Hängeanordnung mit Langstabisolatoren, und
- Figur 2: ein Sonderbetriebsmittel, und
- Figur 3: eine Hängeanordnung mit Sonderbetriebsmitteln, und
- Figur 4: die Hängeanordnung nach Figur 3 mit zusätzlichen Koronarringen.

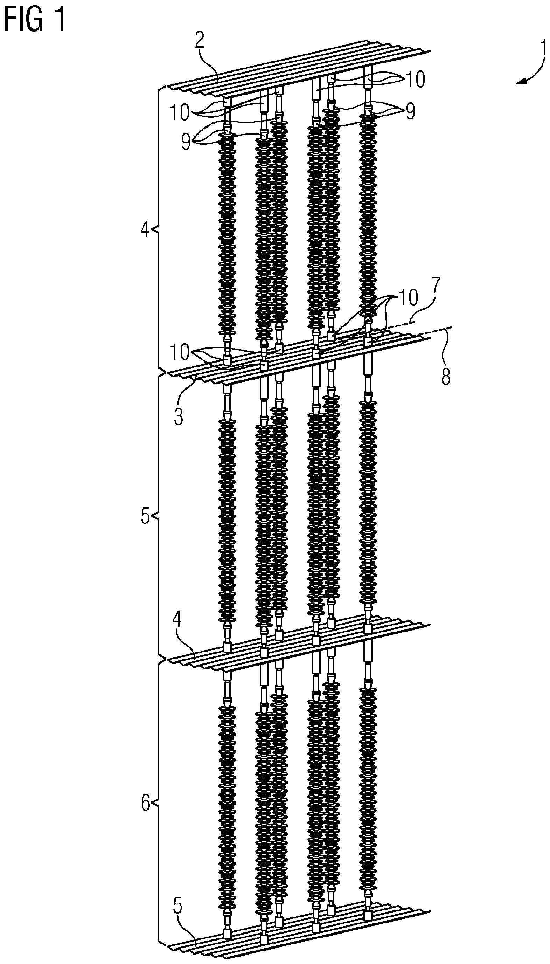

Die Figur 1 zeigt eine erfindungsgemäße Hängeanordnung für elektrische Betriebsmittel. Die elektrischen Betriebsmittel sind im gezeigten Fall so genannte Langstabisolatoren 9. Die Betriebsmittel 9 sind an einem oberen Befestigungsmittel 2 angehängt. Das obere Befestigungsmittel 2 dient zum Aufhängen der gesamten Hängeanordnung, beispielsweise an einer Hallendecke oder einer entsprechenden Aufhängungsvorrichtung im Freiluftbetrieb. Das obere Befestigungsmittel 2 ist im Wesentlichen als plattenförmiges, flächiges Metallelement ausgebildet. Dieses Metallelement ist jedoch nicht massiv, sondern weist einen in der Zeichnung angedeuteten wellenförmigen Querschnitt des Profils auf. Dadurch ist dieses Bauteil vergleichsweise leicht bei hoher mechanischer Stabilität. Die Betriebsmittel 9 sind über biegsame Kontaktmittel 10 mit dem oberen Befestigungsmittel 2 verbunden. Bei den biegsamen Kontaktmitteln 10 handelt es sich um kurze Zylinder mit jeweils einem Kugelgelenk. Das Kugelgelenk bietet einen Hohlraum, in den eine kugelförmige Verdickung am Ende des Isolators eingelegt ist. Auf diese Weise wird eine hohe Flexibilität erreicht. Die biegsamen Kontaktmitteln 10 sind aus Metall ausgebildet. Sie ermöglichen die mechanische Ankopplung der verwendeten Langstabisolatoren an das obere Befestigungsmittel 2. Am unteren Ende der Langstabisolatoren 9 sind wiederum biegsame Kontaktmittel 10 gleicher Bauart angeordnet, die auf einem unteren Befestigungsmittel 3 angeordnet sind. Das untere Befestigungsmittel 3 ist im Wesentlichen gleich aufgebaut wie das obere Befestigungsmittel 2, wobei jedoch an der Unterseite des unteren Befestigungsmittels 3 weitere biegsame Kontaktmittel 10 angebracht sind, so dass weitere Kombinationen aus Betriebsmitteln 9 und unteren Befestigungsmitteln 4, 5 angehängt werden können. Im dargestellten Bild werden auf diese Weise drei Module 4, 5, 6 ausgebildet, die eine hängende Anordnung einer Vielzahl von Langstabisolatoren bei sehr geringem Platzbedarf am Erdboden benötigen.

Durch die biegsamen Kontaktmittel 10 ist die hängende Anordnung der Langstabisolatoren in der Lage, bei mechanischen Stößen oder Schwingungen (z.B. bei Erdbeben) mitzuschwingen und auf diese Weise Biegebeanspruchungen auf die Langstabisolatoren stark zu verringern.

Im ersten Modul 4, wie auch in den weiteren Modulen 5 und 6, sind die Langstabisolatoren parallel hängend angeordnet, wobei die Betriebsmittel auf einer waagerechten Ebene gegeneinander versetzt an den Befestigungsmitteln 2, 3 angeordnet sind, so dass die Befestigungsmittel 2, 3 in einer waagrechten Hängeposition stabilisiert werden - selbst bei starken Stößen im Zusammenhang mit Erdbeben. Zur Verdeutlichung sind auf dem unteren Befestigungsmittel 3 zwei Achsen 7, 8 eingezeichnet, entlang derer sich in alternierender Folge die biegsamen Kontaktmittel 10 aufreihen.

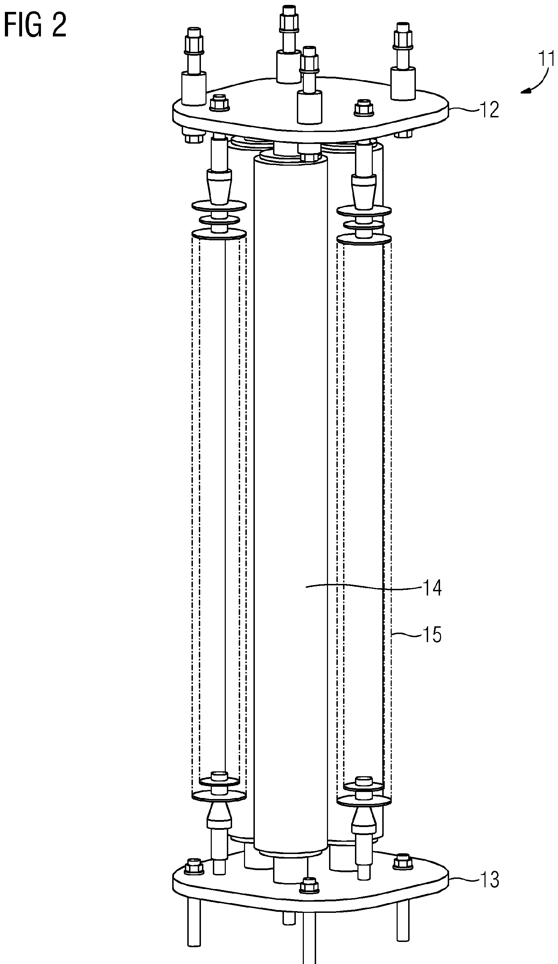

Die Figur 2 zeigt ein komplexes Sonderbetriebsmittel 11, welches eine obere Grundplatte 12 und einer untere Grundplatte 13 aufweist. Zwischen den beiden Grundplatten 12, 13 sind drei Ableitsäulen 14 eines Überspannungsableiters und Langstabisolatoren angeordnet, wobei die Langstabisolatoren in der Darstellung der Figur 2 nur durch gestrichelte Bereiche 15 angedeutet sind. Die Langstabisolatoren verspannen lose aufeinander gelegte Widerstandselemente zu den Ableitsäulen. Dieses Sonderbetriebsmittel 11 weist die Halbleiterwiderstände in den Ableitsäulen ohne ein Gehäuse auf, so dass entstehende Wärme sehr gut nach außen abgegeben werden kann. Es kann bei Hochspannungsgleichstrom-übertragungsanlagen (HGÜ) mit einer Vielzahl von Wechselrichter- / Gleichrichtermodulen eingesetzt und dort beispielsweise an einer Hallendecke angebracht werden.

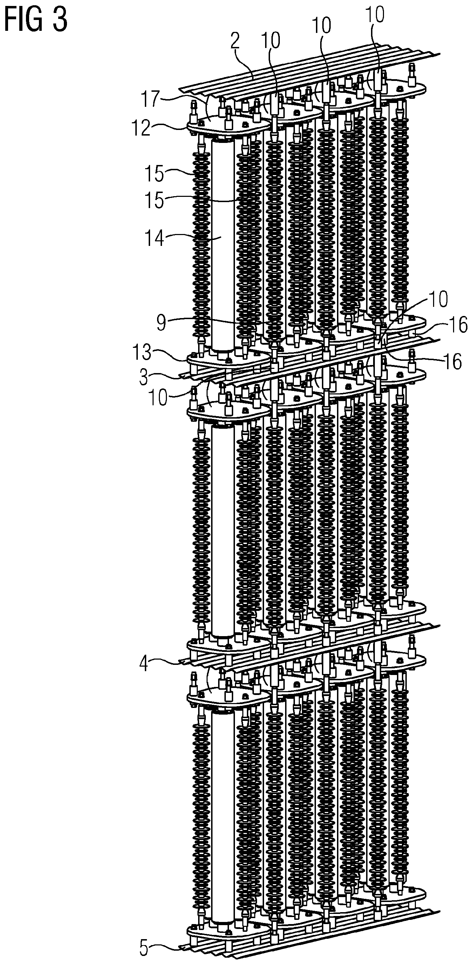

Die Figur 3 zeigt eine erfindungsgemäße Hängeanordnung mit den Sonderbetriebsmitteln der Figur 2. Gleiche Bauelemente wie in der Figur 1 sind mit den gleichen Bezugszeichen gekennzeichnet. Die Sonderbetriebsmittel sind mit ihrer unteren Grundplatte 13 jeweils auf den unteren Befestigungsmitteln 3, 4, 5 starr befestigt. Zusätzlich sind noch weitere Langstabisolatoren 9 über biegsame Kontaktmittel 10 zwischen dem jeweils unteren und oberen Befestigungsmittel angeordnet. Die Verbindung zwischen unteren Grundplatten 13 und unteren Befestigungsmitteln 3, 4, 5 erfolgt jeweils durch starre Kontaktelemente 16. Um die Hängeanordnung mit einer gewissen Flexibilität auszustatten, sind die Sonderbetriebsmittel an ihrer Oberseite über ihre jeweiligen oberen Grundplatten 12 nicht starr mit dem jeweiligen oberen Befestigungsmittel verbunden. Die oberen Grundplatten 12 weisen jedoch eine elektrisch leitfähige Verbindung 17 zu dem darüber hängenden Befestigungsmittel auf, die im Einfachsten Fall durch eine Litze 17 ausgebildet ist.

Vielmehr wird durch die mittels der biegsamen Kontaktmittel 10 verbundenen Langstabisolatoren eine mechanische Verbindung zwischen den Befestigungsmitteln hergestellt. Auf diese Weise können selbst die Betriebsmittel in der Hängeanordnung ausreichend flexibel befestigt werden, so dass die gesamte Hängeanordnung Stöße oder Erdbeben ohne starke Biegebeanspruchung der Sonderbetriebsmittel aushalten kann.

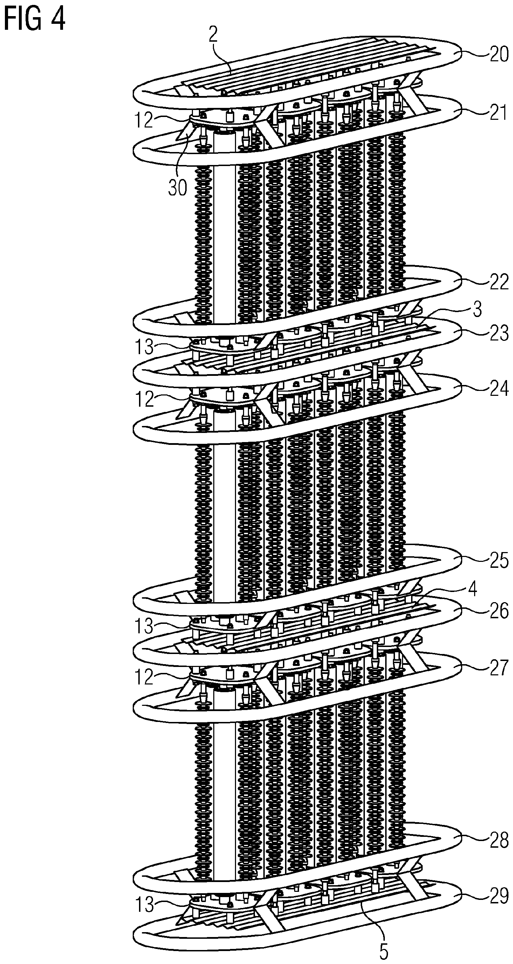

In der Figur 4 ist die Hängeanordnung gemäß der Figur 3 abgebildet, wobei zusätzliche Koronarringe 20 bis 29 zur elektrischen Feldsteuerung angebracht sind. Es sind jeweils vier Sonderbetriebsmittel parallel nebeneinander gehangen, wobei im Bereich des oberen Befestigungsmittels 2 an den beiden jeweils äußersten Sonderbetriebsmitteln Koronarringe angebracht sind. Die Koronarringe sind mittels Streben 30 an den oberen Grundplatten 12 der in der Reihe jeweils außen stehenden Sonderbetriebsmittel angebracht. Dabei zeigt einer der beiden Koronarringe nach oben 20 und der andere nach unten 21. In gleicher Weise sind auch die Koronarringe 23, 24, 26, 27 und 28, 29 an den Grundplatten der jeweils außenstehenden Sonderbetriebsmittel angebracht. Zusätzlich sind im Bereich der unteren Befestigungsmittel 3 und 4 noch die beiden Koronarringe 22 und 25 angeordnet, die jeweils auf den unteren Grundplatten der Sonderbetriebsmittel angebracht sind und nach oben zeigen. Auf diese Weise ist eine elektrische Abschirmung an den beiden Enden der gesamten Hängeanordnung jeweils durch zwei Koronarringe 20, 21, 28, 29 gegeben, während in den Bereichen, in denen zwei Module aneinander stoßen, jeweils drei Koronarringe 22, 27 zur Feldsteuerung vorhanden sind.

## Patentansprüche

1. Hängeanordnung (1) für elektrische Betriebsmittel (9,11), aufweisend ein oberes Befestigungsmittel (2) für eine Aufhängung der Hängeanordnung, an dem mehrere Betriebsmittel (9,11) parallel hängend angeordnet sind, und
ein unteres Befestigungsmittel (3), das an den Betriebsmitteln (9,11) hängend angeordnet ist,
wobei die Betriebsmittel (9,11) mit den Befestigungsmitteln (2,3) jeweils durch biegsame Kontaktmittel (10) verbunden sind, **dadurch gekennzeichnet, dass**
ein Sonderbetriebsmittel (11) eine untere Grundplatte (13) und eine obere Grundplatte (12) aufweist und die untere Grundplatte (13) mittels starrer Kontaktelemente (16) mit dem unteren Befestigungsmittel (3) verbunden ist und die obere Grundplatte (12) über eine elektrisch leitfähige Verbindung (17) nicht starr mit dem oberen Befestigungsmittel (2) verbunden ist.

2. Hängeanordnung (1) nach Anspruch 1, **dadurch gekennzeichnet, dass** die Betriebsmittel (9,11) auf einer waagerechten Ebene gegeneinander versetzt an den Befestigungsmitteln (2,3) angeordnet sind, so dass die Befestigungsmittel (2,3) in einer waagerechten Hängeposition stabilisiert werden.

3. Hängeanordnung (1) nach Anspruch 1 oder 2, **dadurch gekennzeichnet, dass** die Befestigungsmittel (2,3) im Wesentlichen plattenförmig ausgebildet sind.

4. Hängeanordnung (1) nach einem der vorhergehenden Ansprüche, **dadurch gekennzeichnet, dass** die Befestigungsmittel (2,3) im Wesentlichen als ein Profil mit wellenförmigem Querschnitt ausgebildet sind.

5. Hängeanordnung (1) nach einem der vorhergehenden Ansprüche, **dadurch gekennzeichnet, dass** an dem unteren Befestigungsmittel (3) weitere Betriebsmittel (9,11) angeordnet sind, die mit einem zusätzlichen Befestigungsmittel (4,5) verbunden sind.

6. Hängeanordnung (1) nach einem der vorhergehenden Ansprüche, **dadurch gekennzeichnet, dass** die Betriebsmittel (9,11) elektrische Isolatoren (9) umfassen.

7. Hängeanordnung (1) nach Anspruch 6, **dadurch gekennzeichnet, dass** die Isolatoren (9) Langstabisolatoren umfassen.

8. Hängeanordnung (1) nach einem der vorhergehenden Ansprüche, **dadurch gekennzeichnet, dass** die Betriebsmittel (9,11) Überspannungsableiter (11) umfassen.

9. Hängeanordnung (1) nach einem der vorhergehenden Ansprüche, **dadurch gekennzeichnet, dass** jedem Befestigungsmittel (2,3) mindestens ein Koronarring (20-29) zur elektrischen Feldsteuerung zugeordnet ist.

10. Hängeanordnung (1) nach einem der vorhergehenden Ansprüche, **dadurch gekennzeichnet, dass** die biegsamen Kontaktmittel (10) elektrisch leitfähig sind.

11. Hängeanordnung (1) nach einem der vorhergehenden Ansprüche, **dadurch gekennzeichnet, dass** die biegsamen Kontaktmittel (10) als Kabel oder Litzen ausgebildet sind.

12. Hängeanordnung (1) nach einem der vorhergehenden Ansprüche, **dadurch gekennzeichnet, dass** die biegsamen Kontaktmittel (10) Gelenke aufweisen.

13. Hängeanordnung (1) nach Anspruch 12, **dadurch gekennzeichnet, dass** die biegsamen Kontaktmittel (10) Kugelgelenke aufweisen.

14. Hängeanordnung (1) nach Anspruch 12 oder 13, **dadurch gekennzeichnet, dass** die biegsamen Kontaktmittel (10) Scharniergelenke aufweisen.

15. Hängeanordnung (1) nach einem der vorhergehenden Ansprüche, **dadurch gekennzeichnet, dass** die biegsamen Kontaktmittel (10) federnd ausgebildet sind.

## Claims

1. Hanging arrangement (1) for items of electrical operating equipment (9, 11),
having an upper fastening means (2) for suspending the hanging arrangement, a plurality of items of operating equipment (9, 11) being arranged so as to hang in a parallel manner from said upper fastening means, and
a lower fastening means (3) which is arranged so as to hang from the items of operating equipment (9, 11),
wherein the items of operating equipment (9, 11) are connected to the fastening means (2, 3) in each case by flexible contact means (10), **characterized in that**
an item of special operating equipment (11) has a lower main plate (13) and an upper main plate (12) and the lower main plate (13) is connected to the lower fastening means (3) by means of rigid contact elements (16) and the upper main plate (12) is non-rigidly connected to the upper fastening means (2) via an electrically conductive connection (17).

2. Hanging arrangement (1) according to Claim 1, **characterized in that** the items of operating equipment (9, 11) are arranged on the fastening means (2, 3) offset in relation to one another in a horizontal plane, so that the fastening means (2, 3) are stabilized in a horizontal hanging position.

3. Hanging arrangement (1) according to Claim 1 or 2, **characterized in that** the fastening means (2, 3) are designed substantially in the form of a plate.

4. Hanging arrangement (1) according to one of the preceding claims, **characterized in that** the fastening means (2, 3) are designed substantially as a profile with a wavy cross section.

5. Hanging arrangement (1) according to one of the preceding claims, **characterized in that** further items of operating equipment (9, 11) are arranged on the lower fastening means (3), said further items of operating equipment being connected to an additional fastening means (4, 5).

6. Hanging arrangement (1) according to one of the preceding claims, **characterized in that** the items of operating equipment (9, 11) comprise electrical insulators (9).

7. Hanging arrangement (1) according to Claim 6, **characterized in that** the insulators (9) comprise long rod insulators.

8. Hanging arrangement (1) according to one of the preceding claims, **characterized in that** the items of operating equipment (9, 11) comprise surge arresters (11).

9. Hanging arrangement (1) according to one of the preceding claims, **characterized in that** at least one corona ring (20-29) for electrical field control is associated with each fastening means (2, 3).

10. Hanging arrangement (1) according to one of the preceding claims, **characterized in that** the flexible contact means (10) are electrically conductive.

11. Hanging arrangement (1) according to one of the preceding claims, **characterized in that** the flexible contact means (10) are designed as cables or litz wires.

12. Hanging arrangement (1) according to one of the preceding claims, **characterized in that** the flexible contact means (10) have joints.

13. Hanging arrangement (1) according to Claim 12, **characterized in that** the flexible contact means (10) have ball-and-socket joints.

14. Hanging arrangement (1) according to Claim 12 or 13, **characterized in that** the flexible contact means (10) have hinge joints.

15. Hanging arrangement (1) according to one of the preceding claims, **characterized in that** the flexible contact means (10) are of spring-action design.

## Revendications

1. Agencement (1) de suspension de matériels (9,11) d'exploitation électriques, comportant un moyen (2) de fixation supérieur pour la suspension de l'agencement de suspension, auquel sont suspendus parallèlement plusieurs matériels (9,11) d'exploitation, et
un moyen (3) de fixation inférieur, qui est suspendu aux matériels (9,11) d'exploitation,
dans lequel les matériels (9,11) d'exploitation sont reliés aux moyens (2,3) de fixation respectivement par des moyens (10) de contact souples, **caractérisé en ce que**
un matériel (11) d'exploitation particulier a une plaque (13) de base inférieure et une plaque (12) de base supérieure et la plaque (13) de base inférieure est reliée au moyen (3) de fixation inférieur à l'aide d'éléments (16) de contact rigides et la plaque (12) de base supérieure est, par une liaison (17) conductrice de l'électricité, reliée non rigidement au moyen (2) de fixation supérieur.

2. Agencement (1) de suspension suivant la revendication 1, **caractérisé en ce que** les matériels (9,11) d'exploitation sont montés sur les moyens (2,3) de fixation en étant décalés les uns par rapport aux autres sur un plan horizontal, de manière à stabiliser les moyens (2,3) de fixation dans une position horizontale de suspension.

3. Agencement (1) de suspension suivant la revendication 1 ou 2, **caractérisé en ce que** les moyens (2,3) de fixation sont constitués essentiellement sous une forme de plaque.

4. Agencement (1) de suspension suivant l'une des revendications précédentes, **caractérisé en ce que** les moyens (2,3) de fixation sont constitués essentiellement sous la forme d'un profilé de section transversale ondulée.

5. Agencement (1) de suspension suivant l'une des revendications précédentes, **caractérisé en ce que** sur le moyen (3) de fixation inférieur sont disposés d'autres matériels (9,11) d'exploitation, qui sont reliés à un moyen (4,5) de fixation supplémentaire.

6. Agencement (1) de suspension suivant l'une des revendications précédentes, **caractérisé en ce que** les matériels (9,11) d'exploitation comprennent des isolateurs (9) électriques.

7. Agencement (1) de suspension suivant la revendication 6, **caractérisé en ce que** les isolateurs (9) comprennent des isolateurs bâtons longitudinaux.

8. Agencement (1) de suspension suivant l'une des revendications précédentes, **caractérisé en ce que** les matériels (9,11) d'exploitation comprennent des parafoudres (11) de surtension.

9. Agencement (1) de suspension suivant l'une des revendications précédentes, **caractérisé en ce qu'**à chaque moyen (2,3) de fixation est associé au moins un anneau (20 à 29) à effet couronne pour maîtriser le champ électrique.

10. Agencement (1) de suspension suivant l'une des revendications précédentes, **caractérisé en ce que** les moyens (10) de contact souples sont conducteurs de l'électricité.

11. Agencement (1) de suspension suivant l'une des revendications précédentes, **caractérisé en ce que** les moyens (10) de contact souples sont constitués sous la forme de câbles ou de cordons.

12. Agencement (1) de suspension suivant l'une des revendications précédentes, **caractérisé en ce que** les moyens (10) de contact souples ont des articulations.

13. Agencement (1) de suspension suivant la revendication 12, **caractérisé en ce que** les moyens (10) de contact souples ont des rotules.

14. Agencement (1) de suspension suivant la revendication 12 ou 13, **caractérisé en ce que** les moyens (10) de contact souples ont des articulations à charnière.

15. Agencement (1) de suspension suivant l'une des revendications précédentes, **caractérisé en ce que** les moyens (10) de contact souples sont constitués à ressort.
